# EUROPÄISCHE PATENTSCHRIFT

(11) **EP 3 956 222 B1**
(45) Veröffentlichungstag und Bekanntmachung des Hinweises auf die Patenterteilung: **25.12.2024**
(21) Anmeldenummer: 20729002.4
(22) Anmeldetag: 20.05.2020
(51) Int. Cl.: B64D 11/00, G06Q 10/08, H05B 1/02, H05B 6/64, H05B 6/80

(54) **SYSTEM ZUR AUTOMATISCHEN ANPASSUNG VON BETRIEBSPARAMETERN EINER BORD-KÜCHENEINRICHTUNG**
SYSTEM FOR AUTOMATICALLY ADAPTING OPERATING PARAMETERS OF AN ON-BOARD KITCHEN FACILITY
SYSTÈME D'ADAPTATION AUTOMATIQUE DE PARAMÈTRES DE FONCTIONNEMENT D'UN DISPOSITIF DE CUISINE DE BORD

(30) Priorität: 23.05.2019 DE 102019207581
(43) Veröffentlichungstag der Anmeldung: 23.02.2022
(73) Patentinhaber: Airbus Operations GmbH, 21129 Hamburg (DE)
(72) Erfinder: REISS, Matthias, 21129 Hamburg (DE); BAUER, Michael, 21129 Hamburg (DE); MORTENSEN ERNITS, Rafael, 28209 Bremen (DE); FREITAG, Michael, 28719 Bremen (DE)
(74) Vertreter: Isarpatent
(86) Internationale Anmeldenummer: PCT/EP2020/064038
(87) Internationale Veröffentlichungsnummer: WO 2020/234336

(56) Entgegenhaltungen:
- EP-A1- 3 471 506
- EP-A1- 3 637 338
- WO-A1-2019/128543
- DE-A1- 102009 058 327
- DE-U1- 202014 011 144
- MONIKA BAUER: "Intelligentes Catering mit RFID", 11 January 2011 (2011-01-11), XP055197841, Retrieved from the Internet <URL:http://research.iao.fraunhofer.de/ebusiness/download/index.php?request=2010_Intelligentes_Catering_mit_RFID> [retrieved on 20150623]

## Beschreibung

Die vorliegende Erfindung betrifft ein Fahrzeug, insbesondere ein Luftfahrzeug, mit einem System zur automatischen Anpassung von Betriebsparametern einer Bordkücheneinrichtung des Fahrzeugs in Abhängigkeit von bereitgestellten Versorgungsgütern einer Bordverpflegung des Fahrzeugs.

Obwohl in vielfältigen Anwendungen einsetzbar, werden die vorliegende Erfindung sowie die ihr zugrunde liegende Problematik in Bezug auf Passagierflugzeuge näher erläutert. Die beschriebenen Verfahren und Vorrichtungen können jedoch ebenso in unterschiedlichen Fahrzeugen und in allen Bereichen der Transportindustrie, beispielsweise für Straßenfahrzeuge, für Schienenfahrzeuge, für Luftfahrzeuge oder für Wasserfahrzeuge eingesetzt werden.

Derzeit an Bord moderner Passagierflugzeuge vorgesehene Bordküchen umfassen üblicherweise Stellplätze bzw. Einschubfächer, in welche Container und/oder Rollcontainer (englisch: "trolley" oder "galley cart") eingeschoben werden können, die mit Versorgungsgütern bzw. Serviceprodukten wie z. B. Nahrungsmitteln und/oder Getränken zur Versorgung der Passagiere an Bord des Flugzeugs beladen sind. Beispielsweise können die Versorgungsgüter in Form von Tabletts bereitgestellt sein, welche jeweils mit mehreren Produkten vorgepackt sind, z.B. Fertiggerichten, Getränken etc. Zur Kenntlichmachung der Inhalte der Trolleys bzw. Container werden diese klassischerweise mit Aufklebern versehen, die das Catering-Unternehmen bei der Beladung aufbringt. Zusätzlich werden Listen erstellt, denen die Kabinencrew eine Aufstellung der verfügbaren Serviceprodukte sowie deren Lagerposition in der Flugzeugbordküche entnehmen kann.

Moderne Bordküchen enthalten typischerweise elektrische Bordkücheneinrichtungen wie Öfen oder Mikrowellen oder dergleichen zur Zubereitung von Speisen und Getränken. Üblicherweise ist es Aufgabe des Flugpersonals für jede Speise die geeigneten Betriebsparameter der jeweiligen Bordkücheneinrichtung wie beispielsweise Zubereitungstemperatur oder Zubereitungszeit auszuwählen und einzustellen. Dies kann beispielsweise auch durch Auswahl einer vordefinierten Betriebsstrategie bzw. eines vorgegebenen Betriebsmodus geschehen. Eine derartige händische Einstellung der Bordkücheneinrichtung wird mitunter als umständlich, zeitraubend und fehleranfällig betrachtet. Wenn beispielsweise ungewöhnliche oder spezielle Gerichte zubereitet werden sollen, muss das Flugpersonal zunächst herausfinden, welche Betriebseinstellungen das Gericht konkret für eine optimale Zubereitung benötigt.

Die Druckschrift DE 10 2009 058 327 A1 offenbart ein System zur Lagerhaltung in einer Flugzeugbordküche, bei welchem Aufnahmeeinrichtungen wie Boxen, Einschübe oder Trolleys oder dergleichen mit Transpondern versehen sind, die für deren Inhalt charakteristische Identifikationssignale aussenden, welche wiederum von einer Sende-/Empfangseinrichtung der Bordküche eingelesen werden, um derart das Inventar der Bordküche zu bestimmen. Hierdurch soll die Übersicht über das Inventar der Bordküche verbessert werden.

Die Druckschrift EP 3 471 506 A1 beschreibt eine Kochsteuerungsvorrichtung für ein Fahrzeug.

Die Druckschrift DE 20 2014 011144 U1 beschreibt eine Getränkezubereitungsvorrichtung zum Einbau in eine Bordküche.

Die Druckschrift WO 2019/128543 A1 beschreibt ein Verfahren und ein System zur Zubereitung von Lebensmitteln auf der Grundlage der Erkennung von Inhaltsstoffen.

Vor diesem Hintergrund liegt der vorliegenden Erfindung die Aufgabe zugrunde, verbesserte Lösungen für den Betrieb von Bordkücheneinrichtungen zu finden, bei denen der Betrieb in optimaler Weise an das jeweilige Versorgungsgut angepasst ist.

Erfindungsgemäß wird diese Aufgabe gelöst durch ein Fahrzeug mit den Merkmalen des Patentanspruchs 1.

Eine der vorliegenden Erfindung zugrunde liegende Idee besteht darin, die Auswahl der Betriebsparameter zu automatisieren, indem die Versorgungsgüter zunächst mit einer Identifizierungseinrichtung, z.B. einer Kamera, einem Sensor, einem Barcodeleser, einem RFID-Scanner usw., identifiziert werden und darauf aufbauend automatisch eine optimale Einstellung der Betriebsparameter erfolgt. Es wird somit in automatisierter Weise für jedes Versorgungsgut ein optimaler Betriebsmodus der jeweiligen Bordkücheneinrichtung ausgeführt. Das Flugpersonal wird hierdurch in erheblichem Maße entlastet. Gleichzeitig wird sichergestellt, dass beispielsweise Speisen oder dergleichen zufriedenstellend zubereitet werden. Darüber hinaus kann die jeweilige Bordkücheneinrichtung mit einem optimierten Energieverbrauch betrieben werden, sodass zudem der Leistungsverbrauch gesenkt und die Energieverwaltung verbessert wird. Die entsprechenden Daten können ferner dazu genutzt werden, die Speisenzubereitung zu überwachen, zu kontrollieren und zu analysieren.

Der vorliegend verwendete Begriff Versorgungsgut umfasst einerseits einzelne verpackte oder unverpackte Nahrungsmittel wie Speisen und Getränke. Andererseits beinhaltet der Begriff Versorgungsgut im Sinne der Erfindung jedoch ebenso Produkte, die aus mehreren Komponenten bestehen, bzw. Zusammenstellungen aus Einzelprodukten wie beispielsweise Fertiggerichte (mit einer und mehreren Komponenten), vorgepackte Tabletts usw.

Vorteilhafte Ausgestaltungen und Weiterbildungen ergeben sich aus den weiteren Unteransprüchen sowie aus der Beschreibung unter Bezugnahme auf die Figuren.

Gemäß der Erfindung umfasst die Bordkücheneinrichtung einen Ofen, eine Mikrowelle und/oder einer Kühleinrichtung. Hierbei wird die Zubereitung in einem Ofen oder einer Mikrowelle an das jeweilige Versorgungsgut angepasst, z.B. hinsichtlich Zubereitungszeit und/oder Zubereitungstemperatur eines Fertiggerichts. Ebenso wird die Lagerung in einem Kühlschrank, einem Kühlfach oder einer ähnlichen Kühleinrichtung in optimaler Weise an das jeweilige Versorgungsgut angepasst. Beispielsweise kann die Lagertemperatur, eine Luftfeuchtigkeit, eine Luftzirkulation oder dergleichen speziell für jedes Versorgungsgut eingestellt werden. Weitere Anwendungsmöglichkeiten sind beispielsweise gekühlte Serviceeinheiten, d.h. Rollcontainer, Trolley, Speisewagen, Container oder dergleichen. In einem konkreten Beispiel kann ein Einschubfach bzw. Compartment einer Bordküche zur Aufnahme einer Serviceeinheit gekühlt sein. In dem Zusammenhang wäre es denkbar, für gewisse Versorgungsgüter, z.B. vorgepackte Tabletts und/oder einzelne Speisen/Getränke, nachzuweisen, dass die Kühlkette an Bord des Fahrzeugs eingehalten wurde. Hierzu könnten die entsprechenden Daten in dem System gespeichert werden, z.B. auf einem Datenspeicher.

Gemäß einer Weiterbildung können die Betriebsparameter aus der Gruppe ausgewählt sein umfassend Zubereitungstemperatur, Lagertemperatur, Zubereitungszeit, Lagerzeit, Feuchtigkeit, Luftdruck und Luftzirkulation. Es versteht sich jedoch, dass der Fachmann auch weitere Größen oder Parameter als Betriebsparameter im Sinne der Erfindung hinzuziehen kann, die für den jeweiligen Anwendungsfall vorteilhaft bzw. relevant sind. Beispielsweise kann ein Haltbarkeitsdatum des Versorgungsguts bei der Identifikation ausgelesen werden, welches z.B. in Form eines Barcodes oder einer anderen Kennzeichnung auf dem Versorgungsgut hinterlegt sein kann.

Gemäß einer Weiterbildung kann die Steuereinrichtung dazu ausgebildet sein, eine Betriebsstrategie für das identifizierte Versorgungsgut bereitzustellen, die eine Veränderung der Betriebsparameter als Funktion der Zeit vorgibt, und die Bordkücheneinrichtung entsprechend zu der Betriebsstrategie zu betreiben. Es können somit nicht nur bestimmte Betriebsparameter fest eingestellt werden, z.B. eine Ofentemperatur. Darüber hinaus können mehr oder weniger komplexe Betriebsmodi und/oder Betriebsstrategien für das jeweilige Versorgungsgut ausgeführt bzw. eingestellt werden. Beispielsweise können individuelle Heizzonen eines Ofens und/oder eines Herdes in Abhängigkeit von Zubereitungsempfehlungen für das jeweilige Versorgungsgut, z.B. ein Fertiggericht, in zeitabhängiger Weise an- bzw. ausgestellt werden.

Gemäß einer Weiterbildung kann die Identifizierungseinrichtung dazu ausgebildet sein, das Versorgungsgut anhand eines darauf angebrachten Kennzeichens zu identifizieren. Beispielsweise können optoelektronisch lesbare Schriften wie Strichcodes, Balkencodes, Streifencodes oder Barcodes oder dergleichen außen an den Versorgungsgütern angebracht sein, welche von der Identifizierungseinrichtung erkannt werden können. Entsprechend kann die Identifizierungseinrichtung beispielsweise als Barcodescanner oder dergleichen ausgebildet sein. Barcodes im Sinne der Erfindung umfassen hierbei sowohl eindimensionale bzw. lineare Barcodes, d.h. insbesondere Strichcodes, als auch zweidimensionale Ausführungen bzw. Matrixcodes, z.B. QR-Codes usw.

Gemäß einer Weiterbildung kann die Identifizierungseinrichtung ein Barcodelesegerät aufweisen. Die Identifizierungseinrichtung kann somit als Datenerfassungsgerät ausgebildet sein, welches verschiedene Barcodes oder dergleichen lesen und weitergeben kann. Das Barcodelesegerät kann beispielsweise als CCD-Scanner, Laserscanner oder dergleichen eingerichtet sein. Darüber hinaus umfassen Barcodelesegeräte im Sinne der Erfindung jedoch ebenso Kamera-Scanner bzw. Imager, d.h. Geräte, welche einen Barcode mit Hilfe einer, insbesondere optischen, Kamera erfassen und das aufgenommene Bild anschließend mittels digitaler Bildverarbeitung aufbereiten, um den Barcode digital zu erfassen.

Gemäß der Erfindung ist die Identifizierungseinrichtung dazu ausgebildet, das Versorgungsgut anhand von Objekterkennung zu identifizieren. Somit ist die Identifizierungseinrichtung zur allgemeinen Objekterkennung ausgebildet, um einzelne Produkte wie Fertiggerichte oder Getränke zu erkennen. Beispielsweise können derart Produkte identifiziert werden, die sich auf einem vorgepackten Tablett befinden.

Gemäß der Erfindung weist die Identifizierungseinrichtung eine Kamera auf. Beispielsweise kann die Identifizierungseinrichtung eine optische Kamera aufweisen, mit Hilfe derer Formen, Farben usw. von Objekten und/oder Oberflächen erfasst werden und darauf aufbauend ein Versorgungsgut identifiziert wird.

Gemäß einer Weiterbildung kann die Identifizierungseinrichtung zur Identifikation des Versorgungsguts im Bereich einer Tür und/oder einer Zugriffsöffnung der Bordkücheneinrichtung ausgebildet sein. Das Versorgungsgut kann somit während oder kurz vor dem Einführen in die Bordkücheneinrichtung identifiziert werden. Beispielsweise kann ein Barcodelesegerät und/oder eine Kamera im Bereich einer Tür eines Ofens, einer Mikrowelle oder eines Kühlschrank angebracht sein, um das Versorgungsgut vor dem Start des Zubereitungsprozesses bzw. vor der Lagerung zu identifizieren und darauf aufbauend die Zubereitungsstrategie bzw. die Lagerstrategie samt Betriebsparametern festzulegen.

Gemäß einer Weiterbildung kann die Identifizierungseinrichtung zur Identifikation des Versorgungsguts in einem Innenraum der Bordkücheneinrichtung ausgebildet sein. Alternativ oder zusätzlich zu einer Identifizierung im Bereich einer Tür oder einer Zugriffsöffnung kann die Identifizierungseinrichtung somit das Versorgungsgut auch innerhalb der Bordkücheneinrichtung erkennen. Beispielsweise kann eine Kamera und/oder ein oder mehrere Sensoren innerhalb eines Ofens, einer Mikrowelle und/oder eines Kühlschranks ausgebildet sein, um ein in das jeweilige Gerät eingebrachtes Versorgungsgut zu identifizieren.

Gemäß einer Weiterbildung kann das System weiterhin einen Datenspeicher in kommunikativer Verbindung mit der Steuereinrichtung umfassen. Der Datenspeicher kann zur Speicherung der Betriebsparameter für vorgegebene Versorgungsgüter ausgebildet sein. Der Datenspeicher kann somit Vorgaben für unterschiedliche Versorgungsgüter speichern, welche festlegen, wie die jeweiligen Versorgungsgüter zuzubereiten und/oder zu lagern sind. Für jeden Typ von Versorgungsgut können verschiedene Betriebsparameter, Betriebsstrategien und/oder Betriebsmodi abgespeichert sein. Der Datenspeicher kann hierbei lokal in der Bordküche vorgesehen sein. Alternativ oder zusätzlich kann der Datenspeicher auch über eine Datenverbindung abgefragt werden. In diesem Fall kann sich der Datenspeicher auch außerhalb des Fahrzeugs befinden, z.B. kann dieser von einer Airline und/oder einem Catering-Dienstleister bereitgestellt werden. Darüber hinaus kann der Datenspeicher genutzt werden, um Daten hinsichtlich der Versorgungsgüter zu speichern. Beispielsweise können Bestandsführungsdaten einer Bordküche verwaltet und analysiert werden, z.B. zur Nachverfolgung der Lagerung und/oder Zubereitung der Versorgungsgüter. Hiermit kann beispielsweise eine Kühlkette an Bord eines Fahrzeugs nachvollzogen und auf Einhaltung überprüft werden.

Gemäß einer Weiterbildung kann die Steuereinrichtung kommunikativ mit einem Kabinenmanagementsystem und/oder einem Kommunikationssystem des Fahrzeugs verbunden sein. Beispielsweise kann die Steuereinrichtung mit einem Controller Area Network (CAN) eines Kabinenmanagementsystems oder dergleichen verbunden sein, worüber ebenfalls eine Verbindung zu externen Catering-Dienstleistern, Airlines usw. möglich sein kann.

Gemäß einer Weiterbildung kann das System ferner eine Bordküchen-Anzeige umfassen. Die Bordküchen-Anzeige kann zur Anzeige der Betriebsparameter und/oder von Informationen zu dem identifizierten Versorgungsgut ausgebildet sein. Die Bordküchen-Anzeige kann zudem zur Anzeige von Betriebsstrategien bzw. Betriebsmodi ausgebildet sein. Die Bordküchen-Anzeige kann in konkreten Beispielen als elektronische optische Anzeige bzw. Display mit oder ohne Bedienfunktionen ausgebildet sein, z.B. als ein LED-, OLED-, TFT- oder LCD-Bildschirm oder dergleichen mit oder ohne Hintergrundbeleuchtung und/oder als ein Touchscreen usw., welcher neben einer Informationsausgabe auch eine Eingabe über einen als Tastfeld dienenden Bildschirm ermöglicht. Die Bordküchen-Anzeige kann zur Überwachung und/oder Steuerung der Bordküche dienen. Hierzu kann die Bordküchen-Anzeige mit der Steuereinrichtung gekoppelt sein.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: schematische Ansicht eines Systems zur automatischen Anpassung von Betriebsparametern einer Bordkücheneinrichtung in Abhängigkeit von bereitgestellten Versorgungsgütern einer Bordverpflegung eines Fahrzeugs gemäß einer Ausführungsform der Erfindung;
- Fig. 2: schematische seitliche Schnittansicht einer Bordkücheneinrichtung aus dem System aus Fig. 1; und
- Fig. 3: schematische Ansicht eines Luftfahrzeugs mit dem System aus Fig. 1.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

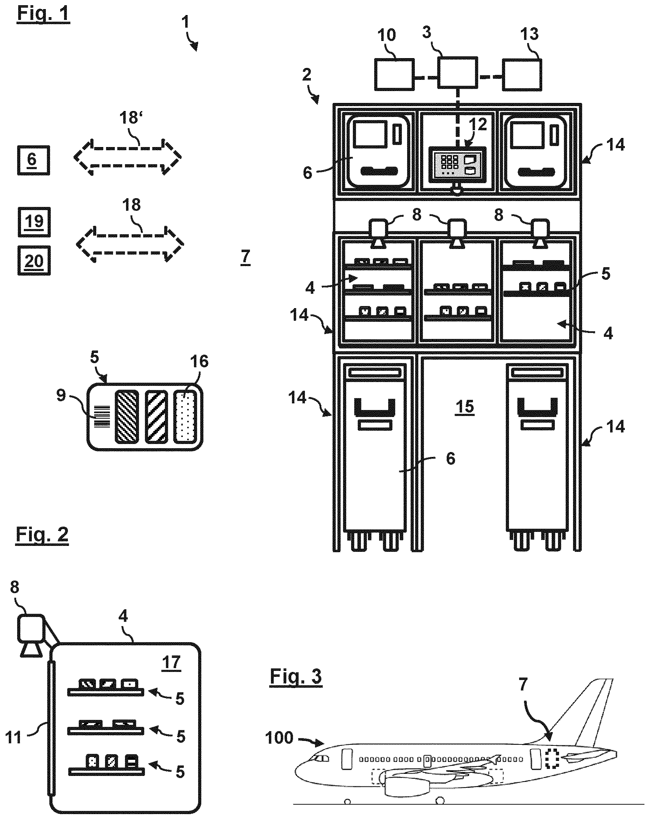

Figur 1 zeigt eine schematische Ansicht eines Systems 1 zur automatischen Anpassung von Betriebsparametern einer Bordkücheneinrichtung 4 in Abhängigkeit von bereitgestellten Versorgungsgütern 5 einer Bordverpflegung eines Fahrzeugs gemäß einer Ausführungsform der Erfindung.

Das System 1 ist in einer Fahrzeugkabine 7 eines Luftfahrzeugs 100 vorgesehen, insbesondere eines Passagierflugzeugs, wie es beispielhaft in Fig. 3 dargestellt ist. Das System 1 umfasst eine Bordküche 2, die in Fig. 1 rein beispielhaft in mehrere Bordküchenmonumente 14 unterteilt ist. Jedes dieser Bordküchenmonumente 14 weist ein oder mehrere Einschubfächer 15 auf, die zur Aufnahme von einer oder mehreren Serviceeinheiten 6 ausgebildet sind.

Eine Serviceeinheit bezeichnet hierbei einerseits Servicewagen wie Rollcontainer, d.h. Trolleys, Speisewagen oder dergleichen. Darüber hinaus umfasst der Begriff Serviceeinheit jedoch ebenso allgemeine Aufnahmeeinrichtungen bzw. Transportvorrichtungen für Versorgungsgüter und/oder Serviceprodukte wie beispielsweise Container, Boxen (englisch: "standard units") oder dergleichen. Weiterhin kann auch ein Tablett oder eine entsprechende Transportvorrichtung eine Serviceeinheit darstellen.

So weist eines der Bordküchenmonumente 14 (links unten in der Bordküche 2 in Fig. 1) ein Einschubfach 15 zur Aufnahme einer Serviceeinheit 6 auf, in diesem Fall ein Rollcontainer. In dem Bordküchenmonument 14 rechts daneben (rechts unten in der Bordküche in Fig. 1) ist ein Einschubfach 15 für zwei Rollcontainer ausgebildet, wobei sich einer dieser beiden Rollcontainer gerade im Einsatz befindet. Über diesen beiden Bordküchenmonumenten 14 ist ein drittes Bordküchenmonument 14 angeordnet, welches drei nebeneinander angeordnete Bordkücheneinrichtungen 4 umfasst, z.B. Öfen, Mikrowellen oder Kühlfächer oder ähnlich. Eine derartige Bordkücheneinrichtung 4 ist beispielhaft in Fig. 2 in einer Schnittansicht von der Seite dargestellt. Auf diesem Bordküchenmonument 14 ist wiederum ein weiteres Bordküchenmonument 14 platziert, welches Standard-Units als Serviceeinheiten 6 in einzelnen Einschubfächern 15 aufnehmen kann, z.B. Essensbehälter. Die Einschubfächer 15 können beispielsweise genormte Dimensionen zur Aufnahme von standardisierten Containern, Trolleys oder dergleichen aufweisen.

Das obere Bordküchenmonument 14 umfasst eine integrierte Bordküchen-Anzeige 12. Die Bordküchen-Anzeige 12 kann beispielsweise ein Bildschirm mit OLED- oder LCD-Technologie oder dergleichen sein, wobei die Bordküchen-Anzeige 12 berührungsempfindlich als Touchscreen bzw. Touchdisplay ausgebildet sein kann. Ferner kann die Bordküchen-Anzeige 12 an dem Bordküchenmonument 14 beweglich angelenkt sein. Die Bordküchen-Anzeige 12 dient in diesem Ausführungsbeispiel als Überwachungs- und/oder Bedienvorrichtung für die Bordküche 2. Hierzu ist die Bordküchen-Anzeige 12 mit einer Steuereinrichtung 3 verbunden, welche zur Steuerung der Bordküche 2 und der darin enthaltenen Bordkücheneinrichtungen 4 ausgebildet ist. Die Steuereinrichtung 3 ist wiederum einerseits mit einem Kabinenmanagementsystem 13, z.B. mit einem Controller Area Network (CAN) oder dergleichen, und andererseits mit einem Datenspeicher 10 verbunden. Die Steuereinrichtung 3 kann hierbei weitere nicht abgebildete Komponenten enthalten, wie beispielsweise einen Mikroprozessor usw.

Die Steuereinrichtung 3 kann ferner dazu ausgebildet sein, Bestandsführungsdaten der Bordküche 2 bereitzustellen, welche über die Bordküchen-Anzeige 12 angezeigt werden können. Die Bestandsführungsdaten können einerseits ein Bestandsverzeichnis für jede der Serviceeinheiten 6 umfassen, d.h. beispielsweise auch für sich im Einsatz befindlichen Rollcontainer. Das Bestandsverzeichnis kann eine Auflistung alle in der jeweiligen Serviceeinheit 6 befindlichen Versorgungsgüter 5 bzw. Serviceprodukte, z.B. Speisen, Getränke usw., umfassen. Andererseits können die Bestandsführungsdaten weitere Daten, wie beispielsweise Cateringdaten, Passagierdaten und/oder Kabinendaten oder dergleichen beinhalten. Cateringdaten können beispielsweise von einem Caterer 20 wie einem Catering-Dienstleister bereitgestellt werden und unter anderem Informationen über die gelieferte Bordverpflegung enthalten, d.h. welche Produkte in welchem Umfang und in welcher Form bereitgestellt werden. Passagierdaten können beispielsweise von einer Airline 19 bereitgestellt werden und unter anderem Informationen über die Passagiere enthalten, welche Passagiere bestimmte Catering-Wünsche bzw. Optionen gebucht haben. Die Kabinendaten können beispielsweise von dem Kabinenmanagementsystem 13 bereitgestellt werden und unter anderem Informationen hinsichtlich der Kabinenkonfiguration enthalten, z.B. einen Sitzplan der Passagiere etc. Die Steuereinrichtung 3 kann zwecks Beschaffung dieser Daten mit den einzelnen Anbietern bzw. Datenquellen direkt oder indirekt per Datenleitung oder drahtloser Verbindung 18 kommunikativ verbunden sein. In der beispielhaften Konfiguration von Fig. 1 ist die Steuereinrichtung 3 über eine Datenleitung mit dem Kabinenmanagementsystem 13 verbunden und kann darüber hinaus über ein dafür vorgesehenes drahtloses Netzwerk 18 mit der Airline 19 und dem Caterer 20 in Kontakt treten, z.B. Daten von Datenbanken abrufen bzw. anfordern.

Ferner können auch die Serviceeinheiten 6 über ein drahtloses Netzwerk 18 mit der Bordküche 2 in Kommunikation stehen, über welche die Bestandsführungsdaten jederzeit auf dem aktuellen Stand gehalten werden können. Eine derartige drahtlose Verbindung kann beispielsweise über ein drahtloses lokales Netzwerk realisiert werden, z.B. ein WLAN oder ähnlich. Hierzu sind unterschiedliche Ausführungen denkbar. Beispielsweise kann ein ohnehin schon für andere Zwecke in einer Passagierkabine vorhandenes drahtloses Netzwerk genutzt werden. Andererseits ist die Bereitstellung eines separaten drahtlosen Netzwerks speziell zu diesem Zweck denkbar. Hierbei kann es sich insbesondere um ein gesichertes Netzwerk handeln, zu dem lediglich Personen bzw. Geräte mit entsprechender Sicherheitsauthentifizierung Zugang erhalten, z.B. das Bordpersonal des Fahrzeugs und/oder entsprechende elektronische Vorrichtungen, die lediglich von dem Bordpersonal bedient werden sollen/können.

Jede der Bordkücheneinrichtungen 4 ist mit einer Identifizierungseinrichtung 8 versehen, die dazu ausgebildet ist, ein Versorgungsgut 5 zu identifizieren, welches in die Bordkücheneinrichtung 4 eingebracht wird. Hierzu sind die Identifizierungseinrichtungen 8 in dem gezeigten Beispiel oberhalb einer Tür 11 der Bordkücheneinrichtungen 4 angebracht.

Beispielsweise kann das Versorgungsgut 5 wie links unten in Fig. 1 beispielhaft eingezeichnet ein vorgepacktes Essenstablett mit mehreren vorbereiteten Fertiggerichten 16 bzw. Speisen sein, z.B. ein Hauptgericht und zwei Beilagen. Um das Versorgungsgut 5 identifizieren zu können, kann dieses wie dargestellt mit einem Kennzeichen 9 versehen sein, z.B. einem Strichcode oder dergleichen. Um das Kennzeichen 9 beim Einbringen in die Bordkücheneinrichtung 4 auszulesen, kann die Identifizierungseinrichtung 8 als Barcodelesegerät ausgebildet sein, z.B. als CCD-Scanner oder als Kamera. In dem dargestellten Beispiel weist das Tablett 5 ein Kennzeichen 9 auf.

Ebenso kann es vorgesehen sein, dass die auf den Tabletts 5 befindlichen Produkte direkt identifiziert werden, z.B. ebenfalls anhand von Strichcodes oder dergleichen, die auf den Produkten angebracht sind. Erfindungsgemäß kann die Identifizierungseinrichtung 8 zudem die äußere Gestalt der Produkte bestimmen und auf dieser Basis die Produkte bzw. die Tabletts 5 identifizieren, durch optische Erfassung der äußeren Gestalt auf der Basis von Objekterkennungsalgorithmen, denen Objektmodelle der Produkte zugrunde liegen. Die Identifizierungseinrichtung 8 kann fest in die Bordkücheneinrichtung 4 integriert sein. Alternativ kann die Identifizierungseinrichtung 8 ein separates System bilden.

Ferner kann die Identifizierungseinrichtung 8 in anderen Ausführungen zusätzlich zur Identifikation des Versorgungsguts 5 in einem Innenraum 17 der Bordkücheneinrichtung 4 ausgebildet sein. Hierzu können ein oder mehrere Sensoren oder Kameras der Identifizierungseinrichtung 8 in dem Innenraum 17 der Bordkücheneinrichtung 4 angeordnet sein.

Die Steuereinrichtung 3 ist dazu ausgebildet, Betriebsparameter für das identifizierte Versorgungsgut 5 bereitzustellen und die Bordkücheneinrichtung 4 entsprechend zu den Betriebsparametern zu betreiben. Derartige Betriebsparameter können beispielsweise umfassen: eine Zubereitungstemperatur und/oder eine Zubereitungszeit (im Fall eines Ofens oder einer Mikrowelle), eine Lagertemperatur und/oder eine Lagerzeit (z.B. für ein Kühlfach), Feuchtigkeit, Luftdruck, Luftzirkulation usw. Darüber hinaus kann die Steuereinrichtung 3 Betriebsstrategien und/oder Betriebsmodi für das identifizierte Versorgungsgut 5 bereitstellen, die eine Veränderung der Betriebsparameter als Funktion der Zeit festlegen.

Der Betrieb der Bordkücheneinrichtung 4, z.B. ein Ofen, kann somit über die Steuereinrichtung 3 automatisch an den Inhalt des Versorgungsguts 5, z.B. ein Essenstablett mit einem oder mehreren Fertiggerichten 16, angepasst werden. Beispielsweise kann eine Ofentemperatur in optimierter Weise für jede Mahlzeit automatisch eingestellt werden. Darüber hinaus kann beispielsweise eine Zubereitungszeit, ein Luftfluss, ein Luftdruck, ein Dampfgehalt in der Bordkücheneinrichtung 4 oder dergleichen geregelt werden. Im Fall eines Kühlschranks kann beispielsweise die Kühltemperatur geregelt werden, um beispielsweise ein Einfrieren der Produkte zu vermeiden.

Die optimalen Betriebsparameter und Betriebsstrategien für die Zubereitung von Mahlzeiten können in dem Datenspeicher 10 gespeichert sein, sodass auf diese während des Prozesses zugegriffen werden kann. Ferner können diese Daten samt ergänzender Informationen zu dem identifizierten Versorgungsgut 5 auf der Bordküchen-Anzeige 12 dargestellt werden. Gegebenenfalls kann zudem eine Anpassung der Daten durch das Flugpersonal möglich bzw. unter besonderen Umständen erforderlich sein.

Das System 1 kann für verschiedene Anwendungsfälle optimiert werden, wie z.B. optimierte Mahlzeitenqualität, optimierte Verfügbarkeit von Mahlzeiten je nach Crew-Aufgabe oder optimierten Energieverbrauch (mit einem umfassenden Energiemanagement). Die Identifizierungseinrichtungen 8 können Bestandteil der Bordkücheneinrichtung 4 sein oder als Zusatzlösung bereitgestellt werden.

Das System 1 erlaubt somit gewissermaßen eine automatisierte Selbstjustierung der Bordkücheneinrichtungen 4 gemäß der Spezifikation der jeweiligen Versorgungsgüter 5. Der Identifizierungsprozess und die anschließende Regelung können vollautomatisch ablaufen. Beispielsweise kann das System durch Öffnen einer Tür 11 einer Bordkücheneinrichtung 4 automatisch initialisiert werden, wobei ein eingelegtes Versorgungsgutes 5 anschließend automatisch identifiziert wird. Alternativ kann natürlich ebenso eine manuelle Initialisierung vorgesehen sein. Der Prozess kann überwacht und nach seinem Abschluss können die Prozessinformationen zur weiteren Optimierung gespeichert werden.

Einige der wesentlichen Vorteile der beschriebenen Bestandsführung für die Bordverpflegung lassen sich wie folgt zusammenfassen:
- Es wird jederzeit sichergestellt, dass Mahlzeiten optimal und effizient zubereitet werden.
- Ebenso wird sichergestellt, dass Versorgungsgüter angemessen gelagert werden.
- Gleichzeitig wird das Bordpersonal entlastet und es werden Fehler vermieden.
- Die Organisation, die Effizienz und die Übersichtlichkeit der Bordküche werden optimiert.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: System
- 2: Bordküche
- 3: Steuereinrichtung
- 4: Bordkücheneinrichtung
- 5: Versorgungsgut
- 6: Serviceeinheit
- 7: Fahrzeugkabine
- 8: Identifizierungseinrichtung
- 9: Kennzeichen
- 10: Datenspeicher
- 11: Tür
- 12: Bordküchen-Anzeige
- 13: Kabinenmanagementsystem
- 14: Bordküchenmonument
- 15: Einschubfach
- 16: Fertiggericht
- 17: Innenraum
- 18, 18': drahtlose Datenverbindung
- 19: Airline
- 20: Caterer
- 100: Luftfahrzeug

## Patentansprüche

1. Fahrzeug, insbesondere Luftfahrzeug (100), mit einem System (1) zur automatischen Anpassung von Betriebsparametern einer Bordkücheneinrichtung (4) des Fahrzeugs in Abhängigkeit von bereitgestellten Versorgungsgütern (5) einer Bordverpflegung des Fahrzeugs mit:
einer Bordkücheneinrichtung (4), welche eine Identifizierungseinrichtung (8) aufweist, die dazu ausgebildet ist, ein Versorgungsgut (5) zu identifizieren; und
einer Steuereinrichtung (3) zur Steuerung der Bordkücheneinrichtung (4), wobei die Steuereinrichtung (3) dazu ausgebildet ist, Betriebsparameter für das identifizierte Versorgungsgut (5) bereitzustellen und die Bordkücheneinrichtung (4) entsprechend zu den Betriebsparametern zu betreiben;
wobei die Bordkücheneinrichtung (4) zumindest eines von einem Ofen, einer Mikrowelle und einer Kühleinrichtung umfasst, wobei eine Zubereitung und/oder Lagerung an das identifizierte Versorgungsgut (5) angepasst wird;
**dadurch gekennzeichnet, dass**
die Identifizierungseinrichtung (8) eine Kamera aufweist und dazu ausgebildet ist, das Versorgungsgut (5) anhand von Objekterkennung zu identifizieren.

2. Fahrzeug nach Anspruch 1, wobei die Betriebsparameter aus der Gruppe ausgewählt sind umfassend Zubereitungstemperatur, Lagertemperatur, Zubereitungszeit, Lagerzeit, Feuchtigkeit, Luftdruck und Luftzirkulation.

3. Fahrzeug nach Anspruch 1 oder 2, wobei die Steuereinrichtung (3) dazu ausgebildet ist, eine Betriebsstrategie für das identifizierte Versorgungsgut (5) bereitzustellen, die eine Veränderung der Betriebsparameter als Funktion der Zeit vorgibt, und die Bordkücheneinrichtung (4) entsprechend zu der Betriebsstrategie zu betreiben.

4. Fahrzeug nach einem der Ansprüche 1 bis 3, wobei die Identifizierungseinrichtung (8) dazu ausgebildet ist, das Versorgungsgut (5) anhand eines darauf angebrachten Kennzeichens (9) zu identifizieren.

5. Fahrzeug nach einem der Ansprüche 1 bis 4, wobei die Identifizierungseinrichtung (8) ein Barcodelesegerät aufweist.

6. Fahrzeug nach einem der Ansprüche 1 bis 5, wobei die Identifizierungseinrichtung (8) zur Identifikation des Versorgungsguts (5) im Bereich einer Tür (16) und/oder einer Zugriffsöffnung der Bordkücheneinrichtung (4) ausgebildet ist.

7. Fahrzeug nach einem der Ansprüche 1 bis 6, wobei die Identifizierungseinrichtung (8) zur Identifikation des Versorgungsguts (5) in einem Innenraum (17) der Bordkücheneinrichtung (4) ausgebildet ist.

8. Fahrzeug nach einem der Ansprüche 1 bis 7, weiterhin mit:
einem Datenspeicher (10) in kommunikativer Verbindung mit der Steuereinrichtung (3), wobei der Datenspeicher (10) zur Speicherung der Betriebsparameter für vorgegebene Versorgungsgüter (5) ausgebildet ist.

9. Fahrzeug nach einem der Ansprüche 1 bis 8, wobei die Steuereinrichtung (3) kommunikativ mit einem Kabinenmanagementsystem (13) und/oder einem Kommunikationssystem des Fahrzeugs verbunden ist.

10. Fahrzeug nach einem der Ansprüche 1 bis 9, weiterhin mit:
einer Bordküchen-Anzeige (12), welche zur Anzeige der Betriebsparameter und/oder von Informationen zu dem identifizierten Versorgungsgut (5) ausgebildet ist.

## Claims

1. Vehicle, in particular aircraft (100), having a system (1) for automatically adapting operating parameters of a galley device (4) of the vehicle on the basis of provided supply items (5) for on-board catering for the vehicle, containing:
a galley device (4) that has an identification device (8) that is designed to identify a supply item (5); and
a control device (3) for controlling the galley device (4), wherein the control device (3) is designed to provide operating parameters for the identified supply item (5) and to operate the galley device (4) in accordance with the operating parameters;
wherein the galley device (4) comprises at least one of an oven, a microwave and a cooling device, wherein preparation and/or storage is adapted to the identified supply item (5);
**characterized in that** the identification device (8) has a camera and is designed to identify the supply item (5) using object recognition.

2. Vehicle according to Claim 1, wherein the operating parameters are selected from the group comprising preparation temperature, storage temperature, preparation time, storage time, humidity, air pressure and air circulation.

3. Vehicle according to Claim 1 or 2, wherein the control device (3) is designed to provide an operating strategy for the identified supply item (5) that specifies a change in the operating parameters as a function of time, and to operate the galley device (4) in accordance with the operating strategy.

4. Vehicle according to one of Claims 1 to 3, wherein the identification device (8) is designed to identify the supply item (5) on the basis of an identifier (9) attached thereto.

5. Vehicle according to one of Claims 1 to 4, wherein the identification device (8) has a barcode reader.

6. Vehicle according to one of Claims 1 to 5, wherein the identification device (8) is designed to identify the supply item (5) in the region of a door (16) and/or an access opening of the galley device (4).

7. Vehicle according to one of Claims 1 to 6, wherein the identification device (8) is designed to identify the supply item (5) in an interior (17) of the galley device (4) .

8. Vehicle according to one of Claims 1 to 7, furthermore containing:
a data memory (10) connected in terms of communication to the control device (3), wherein the data memory (10) is designed to store the operating parameters for specified supply items (5).

9. Vehicle according to one of Claims 1 to 8, wherein the control device (3) is connected in terms of communication to a cabin management system (13) and/or a communication system of the vehicle.

10. Vehicle according to one of Claims 1 to 9, furthermore containing:
a galley display (12) that is designed to display the operating parameters and/or information about the identified supply item (5).

## Revendications

1. Véhicule, en particulier aéronef (100), comprenant un système (1) permettant d'adapter automatiquement des paramètres de fonctionnement d'un dispositif de cuisine de bord (4) du véhicule en fonction des vivres (5) fournis des provisions de bord du véhicule, comprenant :
un dispositif de cuisine de bord (4) qui présente un dispositif d'identification (8) qui est réalisé pour identifier des vivres (5) ; et
un dispositif de commande (3) pour commander le dispositif de cuisine de bord (4), dans lequel le dispositif de commande (3) est réalisé pour fournir des paramètres de fonctionnement pour les vivres (5) identifiés et pour faire fonctionner le dispositif de cuisine de bord (4) selon les paramètres de fonctionnement ;
dans lequel le dispositif de cuisine de bord (4) comprend au moins un élément parmi un four, un micro-ondes et un dispositif de refroidissement, dans lequel une préparation et/ou un stockage sont adaptés aux vivres (5) identifiés ;
**caractérisé en ce que** le dispositif d'identification (8) présente une caméra et est réalisé pour identifier les vivres (5) à l'aide d'une reconnaissance d'objet.

2. Véhicule selon la revendication 1, dans lequel les paramètres de fonctionnement sont sélectionnés dans le groupe comprenant la température de préparation, la température de stockage, le temps de préparation, le temps de stockage, l'humidité, la pression atmosphérique et la circulation de l'air.

3. Véhicule selon la revendication 1 ou 2, dans lequel le dispositif de commande (3) est réalisé pour fournir une stratégie de fonctionnement pour les vivres (5) identifiés qui spécifie un changement des paramètres de fonctionnement en fonction du temps, et pour faire fonctionner le dispositif de cuisine de bord (4) selon la stratégie de fonctionnement.

4. Véhicule selon l'une quelconque des revendications 1 à 3, dans lequel le dispositif d'identification (8) est réalisé pour identifier les vivres (5) à l'aide d'un repère (9) appliqué à ceux-ci.

5. Véhicule selon l'une quelconque des revendications 1 à 4, dans lequel le dispositif d'identification (8) présente un lecteur de code à barres.

6. Véhicule selon l'une quelconque des revendications 1 à 5, dans lequel le dispositif d'identification (8) est réalisé pour identifier les vivres (5) au niveau d'une porte (16) et/ou d'une ouverture d'accès du dispositif de cuisine de bord (4).

7. Véhicule selon l'une quelconque des revendications 1 à 6, dans lequel le dispositif d'identification (8) est réalisé pour identifier les vivres (5) dans un espace intérieur (17) du dispositif de cuisine de bord (4).

8. Véhicule selon l'une quelconque des revendications 1 à 7, comprenant en outre :
une mémoire de données (10) en liaison de communication avec le dispositif de commande (3), dans lequel la mémoire de données (10) est réalisée pour stocker les paramètres de fonctionnement pour des vivres (5) spécifiés.

9. Véhicule selon l'une quelconque des revendications 1 à 8, dans lequel le dispositif de commande (3) est relié en communication à un système de gestion de cabine (13) et/ou à un système de communication du véhicule.

10. Véhicule selon l'une quelconque des revendications 1 à 9, comprenant en outre :
un dispositif d'affichage de cuisine de bord (12) qui est réalisé pour afficher les paramètres de fonctionnement et/ou des informations concernant les vivres (5) identifiés.
